(19) Europäisches Patentamt
European Patent Office
Office européen des brevets

(11) **EP 4 778 898 A1**

(12) **EUROPEAN PATENT APPLICATION**
published in accordance with Art. 153(4) EPC

(43) Date of publication:
**22.07.2026 Bulletin 2026/30**

(21) Application number: **25741813.7**

(22) Date of filing: **06.01.2025**

(51) International Patent Classification (IPC):
**C03C 13/00** (2006.01)      **C08J 5/04** (2006.01)

(52) Cooperative Patent Classification (CPC):
**C03C 13/00; C08J 5/04**

(86) International application number:
**PCT/JP2025/000083**

(87) International publication number:
**WO 2025/154568 (24.07.2025 Gazette 2025/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.01.2024 JP 2024004827**

(71) Applicant: **Nitto Boseki Co., Ltd.
Fukushima-shi,
Fukushima 960-8161 (JP)**

(72) Inventors:
• **NUKUI, Yosuke
Fukushima-shi, Fukushima 960-8161 (JP)**
• **SAITO, Shoichi
Koriyama-shi, Fukushima 963-8061 (JP)**

(74) Representative: **Schön, Christoph
Dr. Schön, Neymeyr & Partner mbB
Bavariaring 26
80336 München (DE)**

(54) **GLASS FIBERS AND GLASS FIBER-REINFORCED RESIN MOLDED ARTICLE**

(57)    To provide glass fiber that can achieve excellent long-term production stability and that can reduce anisotropy by decreasing a coefficient of linear expansion in an MD direction on formation of a glass fiber-reinforced resin molded article. The glass fiber includes a plurality of glass filaments, and includes 60.0 to 69.0% by mass of $SiO_2$, 18.0 to 26.0% by mass of $Al_2O_3$, 8.0 to 14.0% by mass of MgO, and 0.0 to 4.9% by mass of CaO, with respect to the total amount. The total content of $SiO_2$, $Al_2O_3$, MgO, and CaO is 95.0% by mass or more, the glass filaments have a flat cross-sectional shape, the ratio of the major axis to the minor axis (major axis / minor axis) is in the range of 1.2 to 5.5, and the content of $SiO_2$, S, the content of $Al_2O_3$, A, the content of MgO, M, the content of CaO, C, and the ratio of the major axis to the minor axis (major axis / minor axis), D, satisfy the following expression (1):

$$228.9 \leq (S/A) \times (C + M)^2/D^{1/4} \leq 588.9 \ ... \ (1).$$

**EP 4 778 898 A1**

**Description**

Technical Field

The present invention relates to glass fiber and a glass fiber-reinforced resin molded article.

Background Art

In recent years, particularly in portable electronic devices, in order to reduce costs by decreasing the number of components, the use of dissimilar materials such as iron, other metals, resins, and fiber-reinforced resins at appropriate sites depending on their respective characteristics has been studied.

For example, a glass fiber-reinforced resin molded article including flat cross-section glass fiber, in addition to being excellent in dimensional stability, has higher mechanical strength than a glass fiber-reinforced resin molded article including circular cross-section glass fiber, and therefore is considered to be also usable for applications in which a composite material with a metal is obtained by integral molding with the metal.

In the present specification, glass filaments having a flat cross-sectional shape may be described as "flat cross-section glass filaments", and glass fiber including the flat cross-section glass filaments may be described as "flat cross-section glass fiber". In addition, glass filaments having a substantially circular cross-sectional shape may be described as "circular cross-section glass filaments", and glass fiber substantially formed only of the circular cross-section glass filaments may be described as "circular cross-section glass fiber".

Meanwhile, glass fiber-reinforced resin molded articles generally have a larger coefficient of linear expansion than metals, and therefore, there is a risk that bonding with metals may be weakened due to a difference in amount of deformation. Furthermore, since glass fiber-reinforced resin molded articles generally have a larger coefficient of linear expansion in a TD direction than in an MD direction, an increase in anisotropy becomes disadvantageous for bonding with metals. The MD direction is a direction in which a resin composition flows when producing a glass fiber-reinforced resin molded article, and the TD direction is a direction orthogonal to the direction in which the resin composition flows. In addition, anisotropy means a difference between the coefficient of linear expansion in the TD direction and the coefficient of linear expansion in the MD direction, and is evaluated by the ratio of the coefficient of linear expansion in the MD direction to the coefficient of linear expansion in the TD direction (coefficient of linear expansion in the MD direction / coefficient of linear expansion in the TD direction).

As glass fiber that can impart an extremely low coefficient of linear expansion to the glass fiber-reinforced resin molded article, glass fiber having S-glass compositional features (S-glass fiber) is known. The S-glass compositional features are compositional features including $SiO_2$ in the range of 64.0 to 66.0% by mass, $Al_2O_3$ in the range of 24.0 to 26.0% by mass, and MgO in the range of 9.0 to 11.0% by mass with respect to the total amount of the glass fiber.

However, a glass composition having the S-glass compositional features (S-glass composition) has problems in that spinning of glass fiber is not always easy because the working temperature range, which is calculated as the difference between 1000 poise temperature of molten glass and liquid phase temperature, is narrow, and furthermore, since a crystallization rate of the molten glass is high, long-term production stability of glass fiber is poor.

A high crystallization rate of the molten glass poses a problem in that, for example, in the case where it is necessary to perform spinning at a lower temperature than that for circular cross-section glass fiber, such as when spinning flat cross-section glass fiber, if production (spinning) of glass fiber is continued for a long time, the molten glass cooled by outside air around the nozzle may crystallize. Once the molten glass crystallizes, crystallization proceeds in a chain manner, and even the molten glass inside the nozzle may crystallize. When the molten glass crystallizes inside the nozzle, in order to continue production of glass fiber, crystals inside the nozzle must be removed, and it is necessary to stop production of glass fiber for a long time in order to remove the crystals. As a result, glass fiber obtained from the molten glass is poor in long-term production stability.

In order to solve the problem that spinning of glass fiber with the S-glass compositional features is not always easy, there has been proposed a glass composition including $SiO_2$ in the range of 57.0 to 62.0% by mass, $Al_2O_3$ in the range of 15.0 to 20.0% by mass, MgO in the range of 7.5 to 12.0% by mass, and CaO in the range of 9.0 to 16.5% by mass with respect to the total amount of glass fiber, and also having a total content of $SiO_2$, $Al_2O_3$, MgO, and CaO of 98.0% by mass or more (see Patent Literature 1). There has also been proposed a glass composition including $SiO_2$ in the range of 57.0 to 63.0% by mass, $Al_2O_3$ in the range of 19.0 to 23.0% by mass, MgO in the range of 10.0 to 15.0% by mass, and CaO in the range of 4.0 to 11.0% by mass with respect to the total amount of glass fiber, and also having a total content of $SiO_2$, $Al_2O_3$, MgO, and CaO of 99.5% by mass or more (see Patent Literature 2).

Citation List

Patent Literature

Patent Literature 1: International Publication No. WO 2017/033245
Patent Literature 2: International Publication No. WO 2011/155362

Summary of Invention

Technical Problem

However, glass fiber obtained from the glass compositions described in Patent Literatures 1 and 2 has a disadvantage in that it is not possible to sufficiently obtain an effect of, while decreasing a coefficient of linear expansion in an MD direction of a glass fiber-reinforced resin molded article containing the glass fiber, reducing anisotropy of the coefficient of linear expansion of the glass fiber-reinforced resin molded article.

An object of the present invention is to provide, by eliminating such a disadvantage, glass fiber that can achieve excellent long-term production stability, that can decrease, on formation of a glass fiber-reinforced resin molded article, a coefficient of linear expansion in an MD direction of the glass fiber-reinforced resin molded article, and that can also reduce anisotropy of the coefficient of linear expansion of the glass fiber-reinforced resin molded article.

Solution to Problem

In order to achieve such an object, glass fiber of the present invention is glass fiber including a plurality of glass filaments, the glass fiber including $SiO_2$ in the range of 60.0 to 69.0% by mass, $Al_2O_3$ in the range of 18.0 to 26.0% by mass, MgO in the range of 8.0 to 14.0% by mass, and CaO in the range of 0.0 to 4.9% by mass with respect to the total amount of the glass fiber, wherein the total content of $SiO_2$, $Al_2O_3$, MgO, and CaO is 95.0% by mass or more, the glass filaments have a flat cross-sectional shape, the ratio of the major axis to the minor axis (major axis / minor axis) of the glass filaments is in the range of 1.2 to 5.5, and when the content of $SiO_2$ is defined as S, the content of $Al_2O_3$ is defined as A, the content of MgO is defined as M, the content of CaO is defined as C, and the ratio of the major axis to the minor axis (major axis / minor axis) of the glass filaments is defined as D, the S, A, M, C, and D satisfy the following expression (1):

$$228.9 \le (S/A) \times (C + M)^2/D^{1/4} \le 588.9 \ ... \ (1).$$

According to the flat cross-section glass fiber of the present invention including the flat cross-section glass filaments, excellent long-term production stability can be achieved, and on formation of a glass fiber-reinforced resin molded article, it is possible to decrease a coefficient of linear expansion in the MD direction of the glass fiber-reinforced resin molded article, and also to reduce anisotropy of the coefficient of linear expansion of the glass fiber-reinforced resin molded article.

Here, "excellent long-term production stability can be achieved" means that, in a spinning step described later, when the flat cross-section glass fiber of the present invention is spun for 8 hours, crystallization of molten glass does not occur inside the nozzle within a time period of 30 minutes or less, and that an operation stoppage period of 4 hours or more is not required in order to remove generated crystals.

Also, "a coefficient of linear expansion in the MD direction of the glass fiber-reinforced resin molded article is decreased" means that, for a glass fiber-reinforced resin molded article containing the flat cross-section glass fiber of the present invention and obtained by a method described later, the coefficient of linear expansion in an MD direction measured in accordance with JIS K 7197:2012 is 2.10 ppm or less. In addition, "anisotropy of the coefficient of linear expansion of the glass fiber-reinforced resin molded article can be reduced" means that, for a glass fiber-reinforced resin molded article containing the flat cross-section glass fiber of the present invention and obtained by a method described later, the ratio of the coefficient of linear expansion in the MD direction to the coefficient of linear expansion in the TD direction (coefficient of linear expansion in the MD direction / coefficient of linear expansion in the TD direction), measured in accordance with JIS K 7197:2012, is 0.60 or more.

Also, in the flat cross-section glass fiber of the present invention, it is preferable that the S, A, M, C, and D satisfy the following expression (2):

$$303.1 \le (S/A) \times (C + M)^2/D^{1/4} \le 588.9 \ ... \ (2).$$

According to the flat cross-section glass fiber of the present invention, by having the S, A, M, C, and D satisfy the expression (2), it is possible to achieve more excellent long-term production stability, to decrease, on formation of a glass fiber-reinforced resin molded article, a coefficient of linear expansion in an MD direction of the glass fiber-reinforced resin molded article, and also to reduce anisotropy of the coefficient of linear expansion of the glass fiber-reinforced resin molded article.

Here, "more excellent long-term production stability can be achieved" means that, in a spinning step described later, when the flat cross-section glass fiber of the present invention is spun for 8 hours, crystallization of molten glass does not occur inside the nozzle within a time period of 8 hours or less, and that an operation stoppage period at the time of cutting the glass fiber can be kept within a time period of less than 1.5 hours.

Also, in the flat cross-section glass fiber of the present invention, it is preferable that the S, A, M, C, and D satisfy the following expression (3):

$$454.0 \leq (S/A) \times (C + M)^2/D^{1/4} \leq 535.2 \ ... \ (3).$$

According to the flat cross-section glass fiber of the present invention, by having the S, A, M, C, and D satisfy the expression (3), it is possible to achieve further excellent long-term production stability, to further decrease, on formation of a glass fiber-reinforced resin molded article, a coefficient of linear expansion in an MD direction of the glass fiber-reinforced resin molded article, and also to reduce anisotropy of the coefficient of linear expansion of the glass fiber-reinforced resin molded article.

Here, "further excellent long-term production stability can be achieved" means that, in a spinning step described later, when the flat cross-section glass fiber of the present invention is spun for 8 hours, crystallization of molten glass does not occur inside the nozzle within a time period of 8 hours or less, and that an operation stoppage period at the time of cutting the glass fiber can be kept within a time period of less than 30 minutes.

Also, "a coefficient of linear expansion in an MD direction of the glass fiber-reinforced resin molded article is further decreased" means that, for a glass fiber-reinforced resin molded article containing the flat cross-section glass fiber of the present invention and obtained by a method described later, the coefficient of linear expansion in an MD direction measured in accordance with JIS K 7197:2012 is 2.05 ppm or less.

Also, a glass fiber-reinforced resin molded article of the present invention contains the flat cross-section glass fiber of the present invention.

Description of Embodiments

Hereinafter, embodiments of the present invention will be described in detail.

Flat cross-section glass fiber of the present embodiment is glass fiber including a plurality of glass filaments, the glass fiber including $SiO_2$ in the range of 60.0 to 69.0% by mass, $Al_2O_3$ in the range of 18.0 to 26.0% by mass, MgO in the range of 8.0 to 14.0% by mass, and CaO in the range of 0.0 to 4.9% by mass with respect to the total amount of the glass fiber, wherein the total content of $SiO_2$, $Al_2O_3$, MgO, and CaO is 95.0% by mass or more, the glass filaments have a flat cross-sectional shape, the ratio of the major axis to the minor axis (major axis / minor axis) of the glass filaments is in the range of 1.2 to 5.5, and when the content of $SiO_2$ is defined as S, the content of $AL_2O_3$ is defined as A, the content of MgO is defined as M, the content of CaO is defined as C, and the ratio of the major axis to the minor axis (major axis / minor axis) of the glass filaments is defined as D, the S, A, M, C, and D satisfy the following expression (1), preferably satisfy the following expression (2), and still more preferably satisfy the following expression (3):

$$228.9 \leq (S/A) \times (C + M)^2/D^{1/4} \leq 588.9 \ ... \ (1);$$

$$303.1 \leq (S/A) \times (C + M)^2/D^{1/4} \leq 588.9 \ ... \ (2);$$

and

$$454.0 \leq (S/A) \times (C + M)^2/D^{1/4} \leq 535.2 \ ... \ (3).$$

In the flat cross-section glass fiber of the present embodiment, when the content of $SiO_2$ with respect to the total amount of the glass fiber is less than 60.0% by mass, mechanical strength of the glass fiber decreases. On the other hand, when the content of $SiO_2$ with respect to the total amount of the glass fiber is more than 69.0% by mass, the 1000 poise temperature and the liquid phase temperature become high, making production of the glass fiber difficult.

In the flat cross-section glass fiber of the present embodiment, the content of $SiO_2$ is preferably in the range of 60.6 to 67.9% by mass, more preferably in the range of 61.1 to 67.4% by mass, still more preferably in the range of 61.6 to 66.9% by mass, particularly preferably in the range of 62.1 to 65.8% by mass, markedly preferably in the range of 62.6 to 64.8% by mass, and most preferably in the range of 63.1 to 63.8% by mass, with respect to the total amount of the glass fiber.

Also, in the flat cross-section glass fiber of the present embodiment, when the content of $Al_2O_3$ with respect to the total amount of the glass fiber is less than 18.00% by mass, mechanical strength of the glass fiber decreases. On the other hand, when the content of $Al_2O_3$ with respect to the total amount of the glass fiber is more than 26.00% by mass, the liquid phase temperature becomes high, making production of the fiber difficult.

In the flat cross-section glass fiber of the present embodiment, the content of $Al_2O_3$ is preferably in the range of 19.1 to 24.9% by mass, more preferably in the range of 19.6 to 24.5% by mass, still more preferably in the range of 20.1 to 24.2% by mass, particularly preferably in the range of 20.3 to 23.9% by mass, markedly preferably in the range of 20.6 to 23.4% by mass, and most preferably in the range of 20.9 to 22.9% by mass, with respect to the total amount of the glass fiber.

Also, in the flat cross-section glass fiber of the present embodiment, when the content of MgO with respect to the total amount of the glass fiber is less than 8.00% by mass, a crystal formation rate becomes high, worsening long-term production stability. On the other hand, when the content of MgO with respect to the total amount of the glass fiber is more than 14.00% by mass, mechanical strength of the glass fiber decreases.

In the flat cross-section glass fiber of the present embodiment, the content of MgO is preferably in the range of 8.6 to 13.7% by mass, more preferably in the range of 9.1 to 13.4% by mass, still more preferably in the range of 9.4 to 13.2% by mass, particularly preferably in the range of 9.8 to 12.9% by mass, markedly preferably in the range of 10.3 to 12.7% by mass, and most preferably in the range of 11.1 to 12.4% by mass, with respect to the total amount of the glass fiber.

Also, in the flat cross-section glass fiber of the present embodiment, when the content of CaO with respect to the total amount of the glass fiber is more than 4.9% by mass, on formation of a glass fiber-reinforced resin molded article, the coefficient of linear expansion of the glass fiber-reinforced resin molded article worsens.

In the flat cross-section glass fiber of the present embodiment, the content of CaO is preferably in the range of 3.9% by mass or less, more preferably in the range of 3.4% by mass or less, still more preferably in the range of 0.01 to 2.9% by mass, particularly preferably in the range of 0.03 to 2.9% by mass, and most preferably in the range of 0.05 to 2.9% by mass, with respect to the total amount of the glass fiber.

In the flat cross-section glass fiber of the present embodiment, when the total content of $SiO_2$, $Al_2O_3$, MgO, and CaO with respect to the total amount of the glass fiber is less than 95.0% by mass, the content of other impurity components becomes relatively large, and as a result, spinnability worsens, or mechanical strength of the obtained glass fiber worsens.

In the flat cross-section glass fiber of the present embodiment, the total content of $SiO_2$, $Al_2O_3$, MgO, and CaO with respect to the total amount of the glass fiber is preferably in the range of 98.0% by mass or more, more preferably in the range of 99.0% by mass or more, and still more preferably in the range of 99.5% by mass or more.

The flat cross-section glass fiber of the present embodiment may include $Fe_2O_3$. In that case, the content of $Fe_2O_3$ with respect to the total amount of the glass fiber is, for example, in the range of 0.05 to 0.50% by mass, preferably in the range of 0.10 to 0.45% by mass, more preferably in the range of 0.15 to 0.45% by mass, and still more preferably in the range of 0.18 to 0.40% by mass. The flat cross-section glass fiber of the present embodiment, by having the content of $Fe_2O_3$ with respect to the total amount of the glass fiber within the above range, can improve the deaeration ability of the molten glass while suppressing coloration of the glass fiber, thereby improving producibility of the glass fiber.

The flat cross-section glass fiber of the present embodiment may also include $B_2O_3$. In that case, the content of $B_2O_3$ with respect to the total amount of the glass fiber is, for example, in the range of less than 5.0% by mass, preferably in the range of less than 3.0% by mass, more preferably in the range of less than 1.0% by mass, and still more preferably in the range of less than 0.6% by mass. The flat cross-section glass fiber of the present embodiment, by having the content of $B_2O_3$ with respect to the total amount of the glass fiber within the above range, can improve producibility of the glass fiber without worsening mechanical characteristics of the glass fiber.

The flat cross-section glass fiber of the present embodiment may also include $Li_2O$, $K_2O$, and $Na_2O$. In that case, the total content of $Li_2O$, $K_2O$, and $Na_2O$ with respect to the total amount of the glass fiber is, for example, in the range of less than 5.0% by mass, preferably in the range of less than 3.0% by mass, more preferably in the range of less than 1.0% by mass, still more preferably in the range of less than 0.3% by mass, and particularly preferably in the range of 0.1% by mass or less. The flat cross-section glass fiber of the present embodiment, by having the content of $Li_2O$, $K_2O$, and $Na_2O$ with respect to the total amount of the glass fiber within the above range, can improve producibility of the glass fiber without worsening mechanical characteristics of the glass fiber.

The flat cross-section glass fiber of the present embodiment may also include $ZrO_2$ in the range of 0.1% by mass or less with respect to the total amount of the glass fiber. The flat cross-section glass fiber of the present embodiment, by having the content of $ZrO_2$ with respect to the total amount of the glass fiber within the above range, can reduce melt viscosity of the molten glass while maintaining a low coefficient of linear expansion of the glass fiber, thereby improving producibility of the glass fiber.

Also, the flat cross-section glass fiber of the present embodiment is preferably substantially free from $F_2$ and $Cl_2$,

and is more preferably completely free from $F_2$ and $Cl_2$. That the flat cross-section glass fiber of the present embodiment is substantially free from $F_2$ and $Cl_2$ means that the total content of $F_2$ and $Cl_2$ with respect to the total amount of the glass fiber is in the range of 0.1% by mass or less, and that the flat cross-section glass fiber of the present embodiment is completely free from $F_2$ and $Cl_2$ means that the total content of $F_2$ and $Cl_2$ with respect to the total amount of the glass fiber is 0%.

If the flat cross-section glass fiber of the present embodiment includes $F_2$ and $Cl_2$, there is a concern that mechanical characteristics of the glass fiber worsen.

The flat cross-section glass fiber of the present embodiment may include, as impurities derived from raw materials, oxides of Ba, Sr, P, Ti, Cr, Mn, Co, Ni, Cu, Zn, Mo, W, Ce, Y, La, Bi, Gd, Pr, Sc, or Yb in the range of less than 1.00% by mass in total, with respect to the total amount of the glass fiber. In particular, in the case where the flat cross-section glass fiber of the present embodiment includes, as impurities, BaO, SrO, $P_2O_5$, $TiO_2$, $Cr_2O_3$, NiO, CuO, ZnO, $MoO_3$, $CeO_2$, $Y_2O_3$, $La_2O_3$, $Bi_2O_3$, $Gd_2O_3$, $Pr_2O_3$, $Sc_2O_3$, or $Yb_2O_3$, their contents with respect to the total amount of the glass fiber are each independently preferably in the range of less than 1.00% by mass, more preferably in the range of less than 0.50% by mass, still more preferably in the range of less than 0.10% by mass, particularly preferably in the range of less than 0.05% by mass, markedly preferably in the range of less than 0.01% by mass, and most preferably in the range of less than 0.005% by mass.

In the flat cross-section glass fiber of the present embodiment, when the ratio of the major axis to the minor axis (major axis / minor axis) D of the flat cross-section glass filaments constituting the flat cross-section glass fiber is less than 1.2, anisotropy of the coefficient of linear expansion on formation of a glass fiber-reinforced resin molded article cannot be sufficiently reduced. Also, when the ratio of the major axis to the minor axis (major axis / minor axis) D of the flat cross-section glass filaments is more than 5.5, crystals are likely to be generated in molten glass inside the nozzle during production of the glass fiber, and the glass fiber cannot be stably produced.

In the flat cross-section glass fiber of the present embodiment, the ratio of the major axis to the minor axis (major axis / minor axis) D of the flat cross-section glass filaments constituting the flat cross-section glass fiber is preferably in the range of 1.4 to 4.5, more preferably in the range of 1.6 to 3.8, still more preferably in the range of 1.8 to 3.3, and particularly preferably in the range of 2.1 to 2.9.

In the flat cross-section glass fiber of the present embodiment, the minor axis of the flat cross-section glass filaments constituting the flat cross-section glass fiber is, for example, in the range of 3.5 to 25.0 $\mu$m, preferably in the range of 4.0 to 20.0 $\mu$m, more preferably in the range of 5.1 to 16.0 $\mu$m, still more preferably in the range of 5.6 to 14.0 $\mu$m, especially preferably in the range of 6.1 to 12.0 $\mu$m, particularly preferably in the range of 7.8 to 11.4 $\mu$m, markedly preferably in the range of 8.5 to 11.0 $\mu$m, and most preferably in the range of 8.8 to 10.5 $\mu$m.

In the flat cross-section glass fiber of the present embodiment, the major axis of the flat cross-section glass filaments constituting the flat cross-section glass fiber is, for example, in the range of 12.0 to 94.5 $\mu$m, preferably in the range of 14.0 to 84.0 $\mu$m, more preferably in the range of 16.1 to 60.0 $\mu$m, still more preferably in the range of 17.0 to 55.0 $\mu$m, especially preferably in the range of 17.8 to 50.0 $\mu$m, particularly preferably in the range of 18.3 to 45.0 $\mu$m, markedly preferably in the range of 19.3 to 24.8 $\mu$m, and most preferably in the range of 20.1 to 23.8 $\mu$m.

Furthermore, from the viewpoints that the flat cross-section glass fiber of the present embodiment can achieve excellent long-term production stability, can reduce the coefficient of linear expansion in the MD direction in a glass fiber-reinforced resin molded article containing the flat cross-section glass fiber, and can reduce anisotropy of the coefficient of linear expansion of the glass fiber-reinforced resin molded article, the content of $SiO_2$, S, the content of $Al_2O_3$, A, the content of MgO, M, the content of CaO, C, and the ratio of the major axis to the minor axis (major axis / minor axis) of the glass filaments, D, satisfy the above expression (1), preferably satisfy the above expression (2), and still more preferably satisfy the above expression (3).

In the above expressions (1) to (3), S/A is the ratio of the contents of $SiO_2$ and $Al_2O_3$, which are network-forming oxides forming a glass network, and when the content of $Al_2O_3$, which is less likely to form a glass network as compared with $SiO_2$, increases, molten glass is likely to crystallize when producing the flat cross-section glass fiber of the present embodiment. Also, in the above expressions (1) to (3), C + M is the total content of CaO and MgO, and when the total content of CaO and MgO increases, viscosity of the molten glass decreases, and spinnability tends to be stabilized.

On the other hand, in the above expressions (1) to (3), when D increases, anisotropy of a glass fiber-reinforced resin molded article containing the flat cross-section glass fiber of the present embodiment is reduced, and mechanical characteristics of the glass fiber-reinforced resin molded article are improved, but long-term production stability of the flat cross-section glass fiber of the present embodiment worsens.

From the above, the above expressions (1) to (3) are considered to represent a balance between long-term production stability of the flat cross-section glass fiber of the present embodiment and anisotropy and mechanical characteristics of the glass fiber-reinforced resin molded article of the present embodiment.

Regarding measurement of the content of each component described above in the flat cross-section glass fiber of the present embodiment, the content of Li as the light element can be measured with an ICP emission spectroscopic analyzer, and the contents of the other elements can be measured with a wavelength dispersive X-ray fluorescence analyzer.

The measurement method is as follows. First, a glass batch prepared by mixing a glass raw material, or glass fiber is placed in a platinum crucible, and melted with stirring while being held at a temperature of 1500 to 1650°C for the glass batch and at a temperature of 1450 to 1600°C for the glass fiber for 6 hours in an electric furnace to obtain a homogeneous molten glass. When organic matter adheres to the surface of the glass fiber, or when glass fiber is mainly included as a reinforcing material in organic matter such as resin, the glass fiber is used after the organic matter is removed by, for example, heating for about 0.5 to 24 hours in a muffle furnace at 300 to 650°C. Next, the obtained molten glass is poured onto a carbon plate to produce a glass cullet, and then pulverized and powdered into glass powder. Regarding Li as a light element, the glass powder is thermally decomposed with an acid and then quantitatively analyzed using an ICP emission spectroscopic analyzer. Regarding other elements, the glass powder is molded into a disc shape by a pressing machine and then quantitatively analyzed using a wavelength dispersive X-ray fluorescence analyzer. Quantitative analysis using a wavelength dispersive X-ray fluorescence analyzer can be performed by the following method. First, the content of each component in a measurement sample is measured by the fundamental parameter method. Next, based on the measurement results, at least three samples for calibration curve are prepared, and analysis is performed using the calibration curve method. The content of each component in the samples for calibration curve can be quantitatively analyzed by an ICP emission spectroscopic analyzer. Next, these quantitative analysis results are converted in terms of oxides to calculate the content of each component and the total amount, and the above content of each component can be determined from these numerical values (% by mass).

The flat cross-section glass fiber of the present embodiment can be produced as follows. First, a glass raw material (glass batch) prepared to have the compositional features of the glass composition used for the flat cross-section glass fiber of the present embodiment, based on the components included in ores and waste glass fiber generated in the glass fiber production step or market waste glass, which serve as the glass raw material, the content of each component, and the amount of each component volatilized in the melting process, is supplied to a melting furnace and melted at a temperature in the range of 1500 to 1650°C, for example. Then, the molten glass batch (molten glass) is drawn from 1 to 20000 nozzle tips of a bushing controlled at a predetermined temperature and rapidly cooled. At this time, if the nozzle tips have a non-circular shape and have a protrusion or a notch for rapidly cooling the molten glass, and if the temperature condition is controlled, flat cross-section glass filaments having a flat, such as elliptical or long-oval, cross-sectional shape can be obtained.

Subsequently, the glass filaments formed are applied with a sizing agent or binder using an applicator as an application apparatus. While 1 to 20000 of the glass filaments are bundled using a bundling shoe, the glass filaments are wound on a tube at a high speed using a winding apparatus to obtain flat cross-section glass fiber.

In the flat cross-section glass fiber of the present embodiment, more than 50% of the glass filaments constituting the flat cross-section glass fiber are the flat cross-section glass filaments, and preferably 80% or more are the flat cross-section glass filaments, more preferably 90% or more are the flat cross-section glass filaments, and still more preferably 100% are the flat cross-section glass filaments.

Note that the step of melting a glass batch, fiberizing it to obtain flat cross-section glass filaments, and then gathering a plurality of glass filaments including the flat cross-section glass filaments to obtain a flat cross-section glass fiber yarn is referred to as spinning step.

The flat cross-section glass filaments included in the flat cross-section glass fiber of the present embodiment can have their minor axis and major axis adjusted by controlling the major axis and minor axis of the nozzle tips, the winding speed, temperature conditions, and the like. For example, by increasing the winding speed, the minor axis and major axis can be made smaller, and by decreasing the winding speed, the minor axis and major axis can be made larger.

In the flat cross-section glass fiber of the present embodiment, the major axis and minor axis of the flat cross-section glass filaments can be measured as follows, for example.

First, in the case where the flat cross-section glass fiber of the present embodiment is not included in a glass fiber-reinforced resin molded article, the flat cross-section glass fiber is embedded in a resin such as an epoxy resin, the resin is cured, the cured resin is cut and its cross-section is polished, and then the cross-section of the cured resin is observed using an electron microscope. Then, for all of or 200 or more of the flat cross-section glass filaments exposed in the cross-section of the cured resin, the longest side passing approximately through the center of the flat cross-section glass filament is defined as the major axis, and the side orthogonal to the major axis at approximately the center of the flat cross-section glass filament is defined as the minor axis, and their lengths are each measured.

Also, in the case where the flat cross-section glass fiber is included in a glass fiber-reinforced resin molded article, the glass fiber-reinforced resin molded article is cut and its cross-section is polished, and then the cross-section of the resin is observed using an electron microscope. Then, for 200 or more of the flat cross-section glass filaments exposed in the cross-section of the resin, the longest side passing approximately through the center of the flat cross-section glass filament is defined as the major axis, and the side orthogonal to the major axis at approximately the center of the flat cross-section glass filament is defined as the minor axis, and their lengths are each measured.

Here, in either case where the flat cross-section glass fiber is not included in a glass fiber-reinforced resin molded article, or case where it is included in a glass fiber-reinforced resin molded article, the major axis and minor axis of the cross-section can also be measured by image processing using an automatic analysis apparatus on the image obtained from an electron microscope.

Then, from the lengths of the major axis and minor axis of the flat cross-section glass filaments of the present embodiment measured as described above, the ratio of the major axis to the minor axis (major axis / minor axis) D of the flat cross-section glass filaments of the present embodiment is calculated.

The flat cross-section glass fiber of the present embodiment may be coated with an organic matter on the surface thereof for the purposes such as improvement of glass filament convergence, improvement of adhesiveness between flat cross-section glass fiber and a resin, and improvement of uniform dispersibility of flat cross-section glass fiber in a mixture of flat cross-section glass fiber and resin or inorganic material. Examples of such an organic matter can include starch, urethane resins, epoxy resins, vinyl acetate resins, acrylic resins, modified polypropylene, particularly carboxylic acid-modified polypropylene, and a copolymer of (poly)carboxylic acid, particularly maleic acid, and an unsaturated monomer. The flat cross-section glass fiber of the present embodiment may be coated with the resin composition including a silane coupling agent, a lubricant, a surfactant, and the like in addition to these resins. The flat cross-section glass fiber of the present embodiment may be coated with the treating agent composition not including the above resins and including a silane coupling agent, a surfactant, and the like. Such a resin composition or treating agent composition covers the flat cross-section glass fiber in the range of 0.03 to 2.0% by mass based on the mass of the flat cross-section glass fiber of the present embodiment in a state where it is not coated with the resin composition or the treating agent composition. The flat cross-section glass fiber can be coated with the organic matter by applying a resin solution or a resin composition solution to the flat cross-section glass fiber using a known method such as a roller applicator, for example, in the production step of the flat cross-section glass fiber and then drying the flat cross-section glass fiber to which the resin solution or the resin composition solution is applied. The coating can also be performed by immersing the flat cross-section glass fiber of the present embodiment in the form of a woven fabric in the treating agent composition solution and then drying the flat cross-section glass fiber to which the treating agent composition is applied.

Here, examples of the silane coupling agent include aminosilanes, ureidosilanes, chlorosilanes, epoxysilanes, mercaptosilanes, vinylsilanes, (meth)acrylsilanes, phenylsilanes, styrylsilanes, and isocyanate silanes. In the present embodiment, the silane coupling agents may be used singly or in combination of two or more.

Examples of the aminosilane include $\gamma$-aminopropyltriethoxysilane, N-$\beta$-(aminoethyl)-$\gamma$-aminopropyltrimethoxysilane, N-$\beta$-(aminoethyl)-N'-$\beta$-(aminoethyl)-$\gamma$-aminopropyltrimethoxysilane, and $\gamma$-anilinopropyltrimethoxysilane.

Examples of the ureidosilane include $\gamma$-ureidopropyltriethoxysilane.

Examples of the chlorosilane include $\gamma$-chloropropyltrimethoxysilane.

Examples of the epoxysilane include $\beta$-(3,4 - epoxycyclohexyl)ethyltrimethoxysilane and $\gamma$-glycidoxypropyltrimethoxysilane.

Examples of the mercaptosilane include $\gamma$-mercaptotrimethoxysilane and $\gamma$-mercaptopropyltrimethoxysilane.

Examples of the vinylsilane include vinyltrimethoxysilane, N-$\beta$-(N-vinylbenzylaminoethyl)-$\gamma$-aminopropyltrimethoxysilane, and N-benzyl-$\beta$-aminoethyl-$\gamma$-aminopropyltrimethoxysilane.

Examples of the (meth)acrylsilane include $\gamma$-acryloxypropyltrimethoxysilane and $\gamma$-methacryloxypropyltrimethoxysilane.

Examples of the phenylsilane include phenyltrimethoxysilane.

Examples of the styrylsilane include p-styryltrimethoxysilane.

Examples of the isocyanate silane include $\gamma$-isocyanate propyltriethoxysilane.

Examples of the lubricant include modified silicone oils, animal oils and hydrogenated products thereof, vegetable oils and hydrogenated products thereof, animal waxes, vegetable waxes, mineral waxes, condensates of a higher saturated fatty acid and a higher saturated alcohol, polyethyleneimine, polyalkylpolyamine alkylamide derivatives, fatty acid amides, and quaternary ammonium salts. In the present embodiment, the lubricants may be used singly or in combination of two or more.

Examples of the animal oil include beef tallow.

Examples of the vegetable oil include soybean oil, coconut oil, rapeseed oil, palm oil, and castor oil.

Examples of the animal wax include beeswax and lanolin.

Examples of the vegetable wax include candelilla wax and carnauba wax.

Examples of the mineral wax include paraffin wax and montan wax.

Examples of the condensate of a higher saturated fatty acid and a higher saturated alcohol include stearates such as lauryl stearate.

Examples of the fatty acid amide include dehydrated condensates of polyethylenepolyamines such as diethylenetriamine, triethylenetetramine, and tetraethylenepentamine and fatty acids such as lauric acid, myristic acid, palmitic acid, and stearic acid.

Examples of the quaternary ammonium salt include alkyltrimethylammonium salts such as lauryltrimethylammonium chloride.

Examples of the surfactant include nonionic surfactants, cationic surfactants, anionic surfactants, and amphoteric surfactants. In the present embodiment, the surfactants may be used singly or in combination of two or more.

Examples of the nonionic surfactant include ethylene oxide propylene oxide alkyl ether, polyoxyethylene alkyl ether, polyoxyethylene-polyoxypropylene-block copolymer, alkyl polyoxyethylene-polyoxypropylene block copolymer ether, polyoxyethylene fatty acid ester, polyoxyethylene fatty acid monoester, polyoxyethylene fatty acid diester, polyoxyethylene sorbitan fatty acid ester, glycerol fatty acid ester ethylene oxide adduct, polyoxyethylene castor oil ether, hydrogenated castor oil ethylene oxide adduct, alkylamine ethylene oxide adduct, fatty acid amide ethylene oxide adduct, glycerol fatty acid ester, polyglycerol fatty acid ester, pentaerythritol fatty acid ester, sorbitol fatty acid ester, sorbitan fatty acid ester, sucrose fatty acid ester, polyhydric alcohol alkyl ether, fatty acid alkanolamide, acetylene glycol, acetylene alcohol, ethylene oxide adduct of acetylene glycol, and ethylene oxide adduct of acetylene alcohol.

Examples of the cationic surfactant include alkyldimethylbenzylammonium chloride, alkyltrimethylammonium chloride, alkyl dimethyl ethyl ammonium ethyl sulfate, higher alkylamine salts (such as acetate and hydrochloride), adduct of ethylene oxide to a higher alkylamine, condensate of a higher fatty acid and polyalkylene polyamine, a salt of an ester of a higher fatty acid and alkanolamine, a salt of higher fatty acid amide, imidazoline cationic surfactant, and alkyl pyridinium salt.

Examples of the anionic surfactant include higher alcohol sulfate salts, higher alkyl ether sulfate salts, $\alpha$-olefin sulfate salts, alkylbenzene sulfonate salts, $\alpha$-olefin sulfonate salts, reaction products of fatty acid halide and N-methyl taurine, dialkyl sulfosuccinate salts, higher alcohol phosphate ester salts, and phosphate ester salts of higher alcohol ethylene oxide adduct.

Examples of the amphoteric surfactant include amino acid amphoteric surfactants such as alkali metal salts of alkylaminopropionic acid, betaine amphoteric surfactants such as alkyldimethylbetaine, and imidazoline amphoteric surfactants.

Examples of the form of the flat cross-section glass fiber of the present embodiment include woven fabrics (glass cloths), knitted fabrics, yarns, chopped strands, rovings, chopped strand mats, paper, mesh, braided fabrics, and milled fiber. Chopped strands, rovings, and woven fabrics (glass cloths) are preferred, and woven fabrics (glass cloths) are still more preferred.

For example, when the flat cross-section glass fiber of the present embodiment is a chopped strand, the number of glass filaments constituting the flat cross-section glass fiber of the present embodiment is, for example, 10 to 20000, preferably 50 to 10000, and more preferably 1000 to 8000. The length of the chopped strand, which is the flat cross-section glass fiber of the present embodiment, is, for example, 1.0 to 100.0 mm, preferably 1.2 to 51.0 mm, more preferably 1.5 to 30.0 mm, still more preferably 2.0 to 15.0 mm, and particularly preferably 2.3 to 7.8 mm.

When the flat cross-section glass fiber of the present embodiment is a roving, the number of glass filaments constituting the flat cross-section glass fiber of the present embodiment is, for example, 200 to 30000. The roving, which is the flat cross-section glass fiber of the present embodiment, comprises a mass per unit length of 0.5 to 10000 tex (g/1000 m).

In the case where the flat cross-section glass fiber of the present embodiment is a glass woven fabric, the glass woven fabric can be obtained by weaving the flat cross-section glass fiber of the present embodiment as warp and weft using a loom that is publicly known. Examples of the loom may include jet looms such as air jet or water jet looms, shuttle looms, and rapier looms. Examples of weaving with the loom may include plain weaving, satin weaving, mat weaving, and twill weaving. From the viewpoint of production efficiency, plain weaving is preferred.

The glass fiber woven fabric, after woven, may be subjected to desizing treatment, surface treatment, and opening treatment.

An example of the desizing treatment is a treatment including placing the glass fiber woven fabric in a heating oven having an atmosphere temperature of 350°C to 400°C for 40 to 80 hours to thereby pyrolytically decompose organic matter adhering to the glass fiber.

An example of the surface treatment is a treatment including immersing the glass fiber woven fabric in a solution including the silane coupling agent or including the silane coupling agent and the surfactant, squeezing extra water therefrom, and heat-drying the woven fabric in a temperature range of 80 to 180°C for 1 to 30 minutes.

An example of the opening treatment is a treatment in which the warp yarns of the glass fiber woven fabric are subjected to opening by means of water flow pressure, opening by means of high-frequency vibration using a liquid as a medium, opening by means of the pressure of a fluid having a surface pressure, opening by means of pressing with a roll, or the like under a tension of 20 to 200 N to thereby widen the width of the warp yarns and weft yarns.

It is preferable that the glass fiber woven fabric of the present embodiment has a mass in the range of 5.0 to 220 g/m$^2$ and has a thickness in the range of 4.0 to 200.0 $\mu$m.

The glass fiber woven fabric of the present embodiment may comprise a surface treatment layer including the silane coupling agent or the silane coupling agent and the surfactant. When the glass fiber woven fabric of the present embodiment includes the surface treatment layer, the surface treatment layer can have a mass in the range of 0.03 to 1.50% by mass, for example, with respect to the total amount of the glass fiber woven fabric including the surface treatment layer.

The glass fiber-reinforced resin molded article of the present embodiment is formed of a glass fiber-reinforced resin composition containing the glass fiber of the present embodiment described above. Specifically, the glass fiber-reinforced resin composition includes 10 to 90% by mass of flat cross-section glass fiber with respect to the total amount of the glass fiber-reinforced resin composition, as the glass fiber-reinforced resin composition including resin (thermoplastic resin or thermosetting resin), flat cross-section glass fiber, and other additives. The glass fiber-reinforced resin composition includes 90 to 10% by mass of a resin and includes other additives in the range of 0 to 40% by mass with respect to the total amount of the glass fiber-reinforced resin composition.

Examples of the above thermoplastic resin can include polyethylene, polypropylene, polystyrene, styrene/maleic anhydride resins, styrene/maleimide resins, polyacrylonitrile, acrylonitrile/styrene (AS) resins, acrylonitrile/butadiene/styrene (ABS) resins, chlorinated polyethylene/acrylonitrile/styrene (ACS) resins, acrylonitrile/ethylene/styrene (AES) resins, acrylonitrile/styrene/methyl acrylate (ASA) resins, styrene/acrylonitrile (SAN) resins, methacrylic resins, polyvinyl chloride (PVC), polyvinylidene chloride (PVDC), polyamide, polyacetal, polyethylene terephthalate (PET), polybutylene terephthalate (PBT), polytrimethylene terephthalate (PTT), polycarbonate, polyarylene sulfide, polyethersulfone (PES), polyphenylsulfone (PPSU), polyphenylene ether (PPE), modified polyphenylene ether (m-PPE), polyaryl etherketone, liquid crystal polymer (LCP), fluororesins, polyetherimide (PEI), polyarylate (PAR), polysulfone (PSF), polyamideimide (PAI), polyaminobismaleimide (PABM), thermoplastic polyimide (TPI), polyethylene naphthalate (PEN), ethylene/vinyl acetate (EVA) resins, ionomer (IO) resins, polybutadiene, styrene/butadiene resins, polybutylene, polymethylpentene, olefin/vinyl alcohol resins, cyclic olefin resins, cellulose resins, polylactic acid, polyvinyl alcohol (PVA), polyglycolic acid (PGA), polybutylene succinate (PBS), polybutylene succinate adipate (PBSA), and polybutylene adipate terephthalate (PBAT).

Specific examples of the polyethylene include high density polyethylene (HDPE), medium density polyethylene, low density polyethylene (LDPE), linear low density polyethylene (LLDPE), and ultra high molecular weight polyethylene.

Examples of the polypropylene include isotactic polypropylene, atactic polypropylene, syndiotactic polypropylene, and mixtures thereof.

Examples of the polystyrene include general-purpose polystyrene (GPPS), which is an atactic polystyrene having an atactic structure, high impact polystyrene (HIPS) with a rubber component added to GPPS, and syndiotactic polystyrene with syndiotactic structure.

Examples of the methacrylic resin include polymers obtained by homopolymerizing one of acrylic acid, methacrylic acid, styrene, methyl acrylate, ethyl acrylate, ethyl methacrylate, butyl acrylate, butyl methacrylate, and fatty acid vinyl ester, or polymers obtained by copolymerizing two or more of these.

Examples of the polyvinyl chloride include a vinyl chloride homopolymer, a copolymer of a vinyl chloride monomer and a copolymerizable monomer, or a graft copolymer obtained by graft polymerization of a vinyl chloride monomer to polymer polymerized by a conventionally known method such as emulsion polymerization method, suspension polymerization method, micro suspension polymerization method, or bulk polymerization method.

Examples of the polyamide can include one of components such as polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (Nylon 1012), polyundecanamide (Nylon 11), polyundecamethylene adipamide (Nylon 116), polydodecanamide (Nylon 12), polyxylene adipamide (nylon XD6), polyxylene sebacamide (nylon XD10), polymetaxylylene adipamide (nylon MXD6), polyparaxylylene adipamide (nylon PXD6), polytetramethylene terephthalamide (nylon 4T), polypentamethylene terephthalamide (nylon 5T), polyhexamethylene terephthalamide (nylon 6T), polyhexamethylene isophthalamide (nylon 6I), polynonamethylene terephthalamide (nylon 9T), polydecamethylene terephthalamide (nylon 10T), polyundecamethylene terephthalamide (nylon 11T), polydodecamethylene terephthalamide (nylon 12T), polytetramethylene isophthalamide (nylon 4I), polybis(3-methyl-4-aminohexyl) methane terephthalamide (nylon PACMT), polybis(3-methyl-4-aminohexyl) methane isophthalamide (nylon PACMI), polybis(3-methyl-4-aminohexyl) methane dodecamide (nylon PACM12), and polybis(3-methyl-4-aminohexyl) methane tetradecamide (nylon PACM14) or copolymers or mixtures of two or more of the components.

Examples of the polyacetal include a homopolymer with oxymethylene units as the main repeating unit, and a copolymer mainly consisting of oxymethylene units and containing oxyalkylene units having 2 to 8 adjacent carbon atoms in the main chain.

Examples of the polyethylene terephthalate include a polymer obtained by polycondensation of terephthalic acid or a derivative thereof with ethylene glycol.

Examples of the polybutylene terephthalate include a polymer obtained by polycondensation of terephthalic acid or a derivative thereof with 1,4-butanediol.

Examples of the polytrimethylene terephthalate include polymers obtained by polycondensation of terephthalic acid or a derivative thereof with 1,3-propanediol.

Examples of the polycarbonate include polymers obtained by a transesterification method in which a dihydroxydiaryl compound is reacted with a carbonate such as diphenyl carbonate in a molten state; or polymers obtained by phosgene method in which a dihydroxyaryl compound is reacted with phosgene.

Examples of the polyarylene sulfide include linear polyphenylene sulfide, cross linked polyphenylene sulfide having a high molecular weight obtained by performing a curing reaction after polymerization, polyphenylene sulfide sulfone, polyphenylene sulfide ether, and polyphenylene sulfide ketone.

Examples of the polyphenylene ether include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly[2-(4'-methylphenyl)-1,4-phenylene ether], poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly(2,6-dimethyl-1,4-phenylene ether).

Examples of the modified polyphenylene ether include: a polymer alloy of poly(2,6-dimethyl-1,4-phenylene)ether and polystyrene; a polymer alloy of poly(2,6-dimethyl-1,4-phenylene)ether and a styrene/butadiene copolymer; a polymer alloy of poly(2,6-dimethyl-1,4-phenylene)ether and a styrene/maleic anhydride copolymer; a polymer alloy of poly(2,6-dimethyl-1,4-phenylene)ether and polyamide; a polymer alloy of poly(2,6-dimethyl-1,4-phenylene)ether and styrene/-butadiene/acrylonitrile copolymer; one obtained by introducing a functional group such as an amino group, an epoxy group, a carboxy group, a styryl group, or the like at the polymer chain end of the polyphenylene ether; and one obtained by introducing a functional group such as an amino group, an epoxy group, a carboxy group, a styryl group, a methacryl group, or the like at the polymer chain side chain of the polyphenylene ether.

Examples of the polyaryl etherketone include polyetherketone (PEK), polyetheretherketone (PEEK), polyetherketoneketone (PEKK), and polyetheretherketoneketone (PEEKK).

Examples of the liquid crystal polymer (LCP) include a polymer (copolymer) consisting of one or more structural units selected from aromatic hydroxycarbonyl units which are thermotropic liquid crystal polyesters, aromatic dihydroxy units, aromatic dicarbonyl units, aliphatic dihydroxy units, aliphatic dicarbonyl units, and the like.

Examples of the fluororesin include polytetrafluoroethylene (PTFE), perfluoroalkoxy resins (PFA), fluorinated ethylene propylene resins (FEP), fluorinated ethylene tetrafluoroethylene resins (ETFE), polyvinyl fluoride (PVF), polyvinylidene fluoride (PVDF), polychlorotrifluoroethylene (PCTFE), and ethylene/chlorotrifluoroethylene resin (ECTFE).

Examples of the ionomer (IO) resin include copolymers of an olefin or a styrene and an unsaturated carboxylic acid, wherein a part of carboxyl groups is neutralized with a metal ion.

Examples of the olefin/vinyl alcohol resin include ethylene/vinyl alcohol copolymers, propylene/vinyl alcohol copolymers, saponified products of ethylene/vinyl acetate copolymers, and saponified products of propylene/vinyl acetate copolymers.

Examples of the cyclic olefin resin include monocyclic compounds such as cyclohexene, polycyclic compounds such as tetracyclopentadiene, and polymers of cyclic olefin monomers.

Examples of the polylactic acid include poly-L-lactic acid which is a homopolymer of L-form, poly-D-lactic acid which is a homopolymer of D-form, or a stereocomplex polylactic acid which is a mixture thereof.

Examples of the cellulose resin can include methylcellulose, ethyl cellulose, hydroxycellulose, hydroxymethylcellulose, hydroxyethyl cellulose, hydroxyethyl methylcellulose, hydroxypropylmethylcellulose, cellulose acetate, cellulose propionate, and cellulose butyrate.

Examples of the above thermosetting resin can include unsaturated polyester resins, vinyl ester resins, epoxy (EP) resins, melamine (MF) resins, phenol resins (PF), urethane resins (PU), polyisocyanate, polyisocyanurate, modified polyimide (PI) resin, urea (UF) resins, silicone (SI) resins, furan (FR) resins, benzoguanamine (BR) resins, alkyd resins, xylene resins, bismaleimide triazine (BT) resins, and diallyl phthalate resin (PDAP).

Specific examples of the unsaturated polyester resin include resin obtained by esterification reaction of aliphatic unsaturated dicarboxylic acid and aliphatic diol.

Examples of the vinyl ester resin include bis vinyl ester resins and novolac vinyl ester resins.

Examples of the epoxy resin include bisphenol A epoxy resins, bisphenol F epoxy resins, bisphenol E epoxy resins, bisphenol S epoxy resins, bisphenol M epoxy resins (4,4'-(1,3-phenylenediisopropylidene)bisphenol epoxy resins), bisphenol P epoxy resins (4,4'-(1,4-phenylenediisopropylidene)bisphenol epoxy resins), bisphenol Z epoxy resins (4,4'-cyclohexylidne bisphenol epoxy resins), phenol novolac epoxy resins, cresol novolac epoxy resins, tetraphenol group ethane novolac type epoxy resins, novolac epoxy resins having a condensed ring aromatic hydrocarbon structure, biphenyl epoxy resins, aralkyl epoxy resins such as xylylene epoxy resins and phenyl aralkyl epoxy resins, naphthylene ether epoxy resins, naphthol epoxy resins, naphthalene diol epoxy resins, bifunctional or tetrafunctional epoxy naphthalene resins, binaphthyl epoxy resins, naphthalene aralkyl epoxy resins, anthracene epoxy resins, phenoxy epoxy resins, dicyclopentadiene epoxy resins, norbornene epoxy resins, adamantane epoxy resins, and fluorene epoxy resins.

Examples of the melamine resin include a polymer formed by polycondensation of melamine (2,4,6-triamino-1,3,5-triazine) and formaldehyde.

Examples of the phenolic resin include novolac phenolic resins such as phenol novolac resins, cresol novolac resins, and bisphenol A novolac resins, resol phenol resins such as methylol resole resins and dimethylene ether resole resins, or aryl alkylene phenol resins, and include one of these or combinations of two or more.

Examples of the urea resin include a resin obtained by condensation of urea and formaldehyde.

The above thermoplastic resin or the above thermosetting resin may be used singly or in combinations of two or more.

Examples of the above other additives can include reinforcing fiber other than glass fiber such as carbon fiber and metal fiber, a filler other than glass fiber such as glass powder, talc, and mica, a flame retardant, an UV absorber, a heat stabilizer, an antioxidant, an antistatic agent, a fluidity improver, an anti-blocking agent, a lubricant, a nucleating agent, an antibacterial agent, and pigment.

The glass fiber-reinforced resin composition may be prepreg obtained by impregnating the glass fiber woven fabric with the resin by a known method per se and semi-curing the woven fabric.

The glass fiber-reinforced resin composition can be molded by a known molding method to obtain various glass fiber-reinforced resin molded articles of the present embodiment. Examples of the known molding method include injection molding method, injection compression molding method, two-color molding method, hollow molding method, foam molding method including supercritical fluid, insert molding method, in-mold coating molding method, autoclave molding method, extrusion molding method, sheet molding method, thermal molding method, rotational molding method, laminate molding method, press molding method, blow molding method, stamping molding method, infusion method, hand lay-up method, spray-up method, low-pressure RIM molding method, resin transfer molding method, sheet molding compound method, bulk molding compound method, pultrusion method, and filament winding method. Curing the prepreg can also provide glass fiber-reinforced resin molded products of the present embodiment.

For the glass fiber-reinforced resin molded article containing the flat cross-section glass fiber of the present embodiment and obtained by the method described later, the coefficient of linear expansion in the TD direction measured in accordance with JIS K 7197:2012 is, for example, 3.00 ppm or less, preferably 2.90 ppm or less, and more preferably 2.80 ppm or less.

For the glass fiber-reinforced resin molded article containing the flat cross-section glass fiber of the present embodiment and obtained by the method described later, the ratio of the coefficient of linear expansion in the MD direction to the coefficient of linear expansion in the TD direction (coefficient of linear expansion in the MD direction / coefficient of linear expansion in the TD direction) measured in accordance with JIS K 7197:2012 is 0.60 or more, preferably 0.65 or more, and more preferably 0.70 or more. Also, the upper limit of the ratio of the coefficient of linear expansion in the MD direction to the coefficient of linear expansion in the TD direction (coefficient of linear expansion in the MD direction / coefficient of linear expansion in the TD direction) is not particularly limited, but it is, for example, 1.40 or less, preferably 1.20 or less, and more preferably 1.10 or less.

Examples of applications of the glass fiber-reinforced resin molded article of the present embodiment include electronic components such as printed wiring boards and connectors, housings of electronic devices, vehicle interior members, vehicle exterior members, housings of electronic devices such antennas and radars, and separators of fuel cells.

Examples and Comparative Examples of the present invention will be shown.

Examples

[Examples 1 to 5 and Comparative Examples 1 to 5]

In each case, a glass raw material prepared to have the compositional features of Examples 1 to 5 and Comparative Examples 1 to 5 shown in Table 1 was melted, and the resulting molten glass was drawn from a bushing provided with 200 nozzle tips to obtain a plurality of the flat cross-section glass filaments. Next, the obtained flat cross-section glass filaments were gathered to obtain the flat cross-section glass fiber of Examples 1 to 5 and Comparative Examples 1 to 5.

The nozzle tips have a hole portion having a flat cross-sectional shape provided with a major axis with a length in a predetermined range and a minor axis with a length in a predetermined range, and a wall portion provided with a notch for cooling the molten glass. At this time, to achieve the minor axis and major axis of Examples 1 to 5 and Comparative Examples 1 to 5 shown in Table 1, the minor axis of the hole portion was adjusted to a length in the range of 0.2 to 2.0 mm, the ratio of length of the major axis to the length of the minor axis of the nozzles was adjusted to the range of 1.3 to 5.5, and the flow rate of the molten glass passing through each nozzle was adjusted to the range of 0.1 to 3.0 g/min.

Next, for the flat cross-section glass fiber of Examples 1 to 5 and Comparative Examples 1 to 5, the major axis and minor axis of the flat cross-section glass filaments were measured, the ratio of the major axis to the minor axis (major axis / minor axis) D was calculated, and the value of $(S/A) \times (C + M)^2/D^{1/4}$ was determined.

Also, for the flat cross-section glass fiber of Examples 1 to 5 and Comparative Examples 1 to 5, long-term production stability was evaluated and the coefficient of linear expansion was measured by the methods described below. The results are shown in Table 1.

[Long-term production stability]

When each flat cross-section glass fiber of Examples 1 to 5 and Comparative Examples 1 to 5 was continuously produced for 8 hours, those for which crystallization did not occur inside the nozzle during the 8 hours and the operation stoppage period at the time of cutting could be kept below 30 minutes were evaluated as "A"; those for which crystallization did not occur inside the nozzle and the operation stoppage period at the time of cutting could be kept at 30 minutes or more and less than 1.5 hours were evaluated as "B"; those for which crystallization occurred inside the nozzle within a time period of more than 30 minutes and 8 hours or less and an operation stoppage period of 1.5 hours or more and less than 4 hours was required to remove the crystals were evaluated as "C"; and those for which crystallization occurred inside the nozzle within a time period of 30 minutes or less and an operation stoppage period of 4 hours or more was required to remove the crystals were evaluated as "D".

[Coefficient of linear expansion]

The surface of each flat cross-section glass fiber of Examples 1 to 5 and Comparative Examples 1 to 5 was coated with a composition including a silane coupling agent and then cut to a length of 3 mm to prepare chopped strands. Next, each of the chopped strands of Examples 1 to 5 and Comparative Examples 1 to 5 and polyamide 6 resin (UBE Industries, Ltd., trade name: UBE1015B) were each kneaded in a twin screw kneader (Shibaura Machine Co., Ltd., trade name: TEM-26SS) at a screw speed of 100 rpm and a temperature of 270°C to produce resin pellets with a glass fiber content of 30% by mass. Next, using each of the resin pellets of Examples 1 to 5 and Comparative Examples 1 to 5, injection molding was performed with an injection molding machine (Nissei Plastic Industrial Co., Ltd., trade name: NEX80) at a mold temperature of 80°C and an injection temperature of 270°C to produce the respective glass fiber-reinforced resin molded articles.

Next, for each of the glass fiber-reinforced resin molded articles of Examples 1 to 5 and Comparative Examples 1 to 5, the coefficient of linear expansion in the direction in which the resin composition flows (MD direction) and in the direction orthogonal to the direction in which the resin composition flows (TD direction) was measured in accordance with JIS K 7197:2012 under the conditions of a measurement temperature range of 50 to 150°C and a temperature increase rate of 2°C/min.

[Table 1]

| | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| $SiO_2$ (mass%): S | | 63.3 | 62 | 63.3 | 65.5 | 67.3 | 64.7 | 64.7 | 63.3 | 65.5 | 59.4 |
| $Al_2O_3$ (mass%): A | | 21.1 | 21.1 | 23.5 | 23.2 | 20.0 | 25.0 | 25.0 | 21.1 | 23.2 | 18.9 |
| MgO (mass%): M | | 11.9 | 12.1 | 12.4 | 10.5 | 11.8 | 9.9 | 9.9 | 11.9 | 10.5 | 9.9 |
| CaO (mass%): C | | 2.9 | 3.9 | 0.3 | 0.3 | 0.3 | 0.1 | 0.1 | 2.9 | 0.3 | 11.1 |
| $Fe_2O_3$ (mass%) | | 0.2 | 0.3 | 0.2 | 0.2 | 0.3 | 0.3 | 0.3 | 0.2 | 0.2 | 0.1 |
| $B_2O_3$ (mass%) | | 0.5 | 0.5 | 0.3 | 0.3 | 0.3 | 0.0 | 0.0 | 0.5 | 0.3 | 0.5 |
| $Li_2O+Na_2O+K_2O$ (mass%) | | 0.1 | 0.1 | 0.0 | 0.0 | 0.0 | 0.0 | 0.0 | 0.1 | 0.0 | 0.1 |
| $SiO_2+Al_2O_3+MgO+CaO$ (mass%) | | 99.2 | 99.1 | 99.5 | 99.5 | 99.4 | 99.7 | 99.7 | 99.2 | 99.5 | 99.3 |
| Total (mass%) | | 100.0 | 100.0 | 100.0 | 100.0 | 100.0 | 100.0 | 100.0 | 100.0 | 100.0 | 100.0 |
| Minor axis ($\mu$m) | | 8.4 | 7.8 | 9.9 | 7.5 | 9.2 | 7.4 | 9.2 | 12.3 | 6.1 | 9.2 |
| Major axis ($\mu$m) | | 23.4 | 25.0 | 19.8 | 26.2 | 21.2 | 26.6 | 21.2 | 16.0 | 32.2 | 21.2 |
| Major axis /Minor axis: D | | 2.8 | 3.2 | 2.0 | 3.5 | 2.3 | 3.6 | 2.3 | 1.3 | 5.3 | 2.3 |
| $(S/A)\times(C+M)^2/D^{1/4}$ | | 507.99 | 562.42 | 365.33 | 240.76 | 400.06 | 187.88 | 210.15 | 615.40 | 217.04 | 1125.46 |
| Long-term production stability | | A | A | B | C | B | D | D | A | D | A |
| Coefficient of linear expansion of molded article | MD direction (ppm) | 2.02 | 2.06 | 2.00 | 2.00 | 2.05 | 2.01 | 2.03 | 1.99 | 2.04 | 2.16 |
| | TD direction (ppm) | 2.7 | 2.6 | 2.86 | 2.54 | 2.59 | 2.54 | 2.9 | 3.62 | 2.58 | 3.09 |
| | MD/TD ratio | 0.75 | 0.79 | 0.70 | 0.79 | 0.79 | 0.79 | 0.70 | 0.55 | 0.79 | 0.70 |

From Table 1, it is clear that the flat cross-section glass fiber of Examples 1 to 5 can achieve excellent long-term production stability, and on formation of the glass fiber-reinforced resin molded body, it is possible to decrease the coefficient of linear expansion in the MD direction of the glass fiber-reinforced resin molded body, and also to reduce anisotropy.

On the other hand, it is clear that the flat cross-section glass fiber of Comparative Examples 1, 2, and 4, having a value of $(S/A) \times (C + M)^2/D^{1/4}$ of less than 228.9 and thus falling outside the range of the above expression (1), is inferior in long-term production stability. Also, the flat cross-section glass fiber of Comparative Example 3, having a value of $(S/A) \times (C + M)^2/D^{1/4}$ of more than 588.9 and thus falling outside the range of the above expression (1), exhibits a ratio of the coefficient of linear expansion in the MD direction to the coefficient of linear expansion in the TD direction (MD/TD ratio) of 0.55 on formation of the glass fiber-reinforced resin molded body, which cannot be made sufficiently close to 1. The flat cross-section glass fiber of Comparative Example 5, on formation of the glass fiber-reinforced resin molded body, has a coefficient of linear expansion in the MD direction of 2.16 ppm, which is more than 2.10 ppm, and therefore cannot decrease the coefficient of linear expansion in the MD direction of the glass fiber-reinforced resin molded body.

**Claims**

1. Glass fiber comprising a plurality of glass filaments, comprising:

    $SiO_2$ in a range of 60.0 to 69.0% by mass;
    $Al_2O_3$ in a range of 18.0 to 26.0% by mass;
    MgO in a range of 8.0 to 14.0% by mass; and
    CaO in a range of 0.0 to 4.9% by mass,

    with respect to a total amount of the glass fiber, wherein

    a total content of $SiO_2$, $Al_2O_3$, MgO, and CaO is 95.0% by mass or more,
    the glass filaments have a flat cross-sectional shape,
    a ratio of a major axis to a minor axis (major axis / minor axis) of the glass filaments is in a range of 1.2 to 5.5, and
    when a content of $SiO_2$ is defined as S, a content of $Al_2O_3$ is defined as A, a content of MgO is defined as M, a content of CaO is defined as C, and the ratio of the major axis to the minor axis (major axis / minor axis) of the glass filaments is defined as D, the S, A, M, C, and D satisfy a following expression (1):

    $$228.9 \leq (S/A) \times (C + M)^2/D^{1/4} \leq 588.9 \ ... \ (1).$$

2. The glass fiber according to claim 1, wherein the S, A, M, C, and D satisfy a following expression (2):

    $$303.1 \leq (S/A) \times (C + M)^2/D^{1/4} \leq 588.9 \ ... \ (2).$$

3. The glass fiber according to claim 1, wherein the S, A, M, C, and D satisfy a following expression (3):

    $$454.0 \leq (S/A) \times (C + M)^2/D^{1/4} \leq 535.2 \ ... \ (3).$$

4. A glass fiber-reinforced resin molded article comprising the glass fiber according to any one of claims 1 to 3.

## INTERNATIONAL SEARCH REPORT

| International application No. |
|---|
| **PCT/JP2025/000083** |

| A. | CLASSIFICATION OF SUBJECT MATTER |
|---|---|

*C03C 13/00*(2006.01)i; *C08J 5/04*(2006.01)i
FI: C03C13/00; C08J5/04 CEZ

According to International Patent Classification (IPC) or to both national classification and IPC

| B. | FIELDS SEARCHED |
|---|---|

Minimum documentation searched (classification system followed by classification symbols)

C03C13/00-C03C13/06

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

INTERGLAD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2011/155362 A1 (NITTO BOSEKI CO., LTD.) 15 December 2011 (2011-12-15) paragraphs [0016]-[0052], fig. 1-2 | 1-4 |
| A | JP 2021-91907 A (NITTO BOSEKI CO., LTD.) 17 June 2021 (2021-06-17) | 1-4 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 March 2025** | **18 March 2025** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2025/000083**

| Patent document cited in search report | | | Publication date (day/month/year) | Patent family member(s) | | | Publication date (day/month/year) |
|---|---|---|---|---|---|---|---|
| WO | 2011/155362 | A1 | 15 December 2011 | US paragraphs [0018]-[0054], fig. 1-2 | 2013/0210602 | A1 | |
| | | | | EP | 2581350 | A1 | |
| | | | | CN | 102939272 | A | |
| | | | | KR | 10-2013-0044246 | A | |
| JP | 2021-91907 | A | 17 June 2021 | US | 2022/0112358 | A1 | |
| | | | | WO | 2019/216443 | A2 | |
| | | | | EP | 3892671 | A2 | |
| | | | | KR | 10-2021-0091278 | A | |
| | | | | CN | 113474397 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017033245 A

- WO 2011155362 A